Europäisches Patentamt

European Patent Office

Office européen des brevets

(11) Publication number: **0 417 898 A1**

# EUROPEAN PATENT APPLICATION

(21) Application number: 90308422.6

(22) Date of filing: 31.07.90

(51) Int. Cl.⁵: **C21C 5/44**, F27D 1/16, C04B 35/66

(30) Priority: 15.08.89 US 393990
28.06.90 US 545406

(43) Date of publication of application:
20.03.91 Bulletin 91/12

(84) Designated Contracting States:
AT BE CH DE DK ES FR GB GR IT LI LU NL SE

(71) Applicant: MAGNECO/METREL, INC.
206 Factory Road
Addison, Illinois 60101(US)

(72) Inventor: Banerjee, Subrata
1879 Jahns Drive
Wheaton, Illinois 60187(US)

(74) Representative: Baverstock, Michael George
Douglas et al
BOULT, WADE & TENNANT 27 Furnival Street
London, EC4A 1PQ(GB)

(54) Gunning composition.

(57) An improved gunning composition for use in the steel industry includes between 60-75% by weight of a refractory base material, 10-20% by weight of silicon carbide, 7-15% by weight of ball clay, 4-8% by weight of a silica binder material, and, optionally, 5-10% by weight of a graphite material. The silica binder replaces binders composed of petroleum pitch or clay. The silica binder causes the composition to have (1) better adhesion, (2) less cracking, (3) improved strength, and (4) increased resistance to oxidation, corrosion and erosion.

EP 0 417 898 A1

## GUNNING COMPOSITION

This invention relates to a gunning composition for use in the steel industry for repairing and maintaining troughs, runners, ladles, spouts and other equipment used for containing and processing molten steel. The composition is intended for use primarily as a patching material, to be applied on surfaces using gunning processes well known in the iron and steel industry at temperatures of up to about 1000° F.

The gunning composition of the invention can be prepared by mixing 60-75% by weight of a refractory base material, such as calcined clay, mullite, brown fused alumina, or tabular alumina, with 10-20% by weight of silicon carbide, 7-15% by weight of ball clay, and 4-8% by weight of a binder material which includes very fine silica particles (preferably colloidal) dispersed in water. Between 5-10% by weight of a graphite material may optionally be included as a nonwetting agent and to inhibit the chemical reaction between "slag" (present in molten steel) and the refractory base material.

The use of a silica binder represents an improvement over known gunning compositions which utilize petroleum pitch or clay. The silica binder imparts several advantages to the gunning composition including (1) better adhesion to surfaces, particularly those containing carbon, (2) less cracking during evaporation of the water, (3) improved strength, and (4) increased resistance to oxidation, corrosion and erosion.

The gunning composition of the invention includes, as a major component, a refractory base material in an amount of between 60-75% by weight. The refractory base material preferably has an average particle diameter of between 30 micrometers and 7 millimeters and preferably is composed of calcined clay, mullite, brown fused alumina, tabular alumina or mixtures thereof. When calcined clay or mullite is utilized, the amount is preferably between 60-65% by weight. When brown fused alumina is used, the amount is preferably between 70-75% by weight. For tabular alumina, the amount is preferably between 65-70% by weight.

Brown fused alumina is a term of art which refers to a dark brown, glassy looking material including approximately 93-98% by weight alumina, and smaller amounts of titania, silica and iron. Tabular alumina is a term of art which refers to a white, opaque material including approximately 98.5-99.9% by weight alumina and smaller amounts of sodium oxide, silica, magnesium oxide and calcium oxide. Calcined clay is a term of art which refers to a composition having approximately 43-48% by weight alumina, 47-50% by weight silica, and smaller amounts of titania, iron and sodium oxide. Mullite is a term of art which refers to a composition containing approximately 57-73% by weight alumina, 27-40% by weight silica, and smaller amounts of impurities.

In addition to the refractory material, the gunning composition includes between 10-20% by weight of silicon carbide. The silicon carbide preferably has an average diameter of between 30 micrometers and 1.5 millimeters. The silicon carbide reduces physical erosion of the gunning composition after application, and helps prevent the base material from reacting chemically with the slag.

The gunning composition may optionally include 5-10% by weight of graphite which ultimately acts as a nonwetting agent to prevent attachment to or penetration of the base material by slag. The purpose of the graphite is to further inhibit chemical reaction between slag and base material. The graphite may be amorphous or crystalline or in the form of flakes.

The gunning composition of the invention includes between 7-15% by weight of ball clay. Ball clay is a term of art which refers to a composition including 28-30% by weight alumina, 66-70% by weight silica, and smaller amounts of sodium oxide, and titania.

Finally, the gunning composition of the invention includes a silica binder which is formed from finely dispersed (preferably colloidal) silica particles in an aqueous medium. Silica having an average diameter of preferably between 4-100 millimicrons, and most preferably 8-20 millimicrons, is initially dispersed in water in an amount of between 15-70% by weight, preferably about 40% by weight. The resulting silica binder is then mixed with the other components of the gunning composition in an amount of between 4-8% based on the weight of the resulting composition. The resulting gunning composition is in the form of a damp mixture which can be sold to users for application by gunning processes well known in the iron and steel industry. The gunning composition can also be sold as a pelletized product consisting of pellets having diameters of between 1-60 millimeters.

After the gunning composition is applied to the surface, the water initially contained therein evaporates. An inorganic bond is formed between the gunning composition and the receiving surface, leaving a solid patch of refractory composition which has improved strength and increased resistance to oxidation, corrosion and erosion compared to known gunning compositions which utilize petroleum pitch or clay binders.

While the embodiments of the invention disclosed herein are at present considered to be preferred, it is understood that various modifications and improvements can be made without departing from the spirit and scope of the invention. The scope of the invention is indicated int he appended claims, and all changes which come within the meaning and range of equivalency of the claims are intended to be embraced therein.

EXAMPLE I

A gunning composition was prepared by mixing the following components together in the stated weight percentages:

a) 10% brown fused alumina having particle sizes between 3-6 mesh,

b) 15% brown fused alumina having particle sizes between 6-14 mesh,

c) 20% brown fused alumina having particle sizes between 14-60 mesh,

d) 20% brown fused alumina having an average particle size of 100 mesh,

e) 5% silicon carbide having an average particle size of 30 mesh,

f) 5% silicon carbide having an average particle size of 200 mesh,

g) 5% silicon metal having an average particle size of 200 mesh,

h) 10% ball clay,

i) 5% graphite having an average particle size of 200 mesh, and

j) 5% silica binder consisting of 40% colloidal silica having an average diameter of 20 millimicrons, in an aqueous medium.

The resulting gunning composition gave excellent adhesion, strength, resistance to cracking and resistance to oxidation, corrosion and erosion.

EXAMPLE II

A gunning composition was prepared by mixing the following components together in the stated weight percentages:

a) 10% mullite having particle sizes between 3.5-8 mesh

b) 15% mullite having particle sizes between 8-20 mesh,

c) 18% mullite having an average particle size of 20 mesh,

d) 20% mullite having an average particle size of 200 mesh,

e) 7% silicon carbide having an average particle size of 200 mesh,

f) 8% silicon metal having an average particle size of 200 mesh,

g) 10% ball clay,

h) 5% graphite having an average particle size of 200 mesh, and

i) 7% silica binder consisting of 40% colloidal silica having an average diameter of 20 millimicrons, in an aqueous medium.

The resulting gunning composition gave excellent adhesion, strength, resistance to cracking and resistance to oxidation, corrosion and erosion.

## Claims

1. A gunning composition comprising:
60-75% by weight of a granular base material selected from calcined clay, mullite, brown fused alumina, tubular alumina, and mixtures thereof;
10-20% by weight of silicon carbide;
7-15% by weight of ball clay;
4-8% by weight of a binder formed from 15-70% by weight finely dispersed silica in an aqueous medium.

2. A gunning composition as claimed in claim 1 wherein the granular base material comprises calcined clay having an average diameter of between 30 micrometers and 7 millimeters.

3. A gunning composition as claimed in claim 2 wherein the calcined clay is present in an amount of between 60-65% by weight.

4. A gunning composition as claimed in claim 2 or claim 3 wherein the calcined clay comprises 43-48% by weight alumina, 47-50% by weight silica, and smaller amounts of titania, iron and sodium oxide.

5. A gunning composition as claimed in any one of the preceding claims wherein the granular base material comprises mullite having an average diameter of between 30 micrometers and 7 millimeters.

6. A gunning composition as claimed in claim 5 wherein the mullite is present in an amount of between 60-65% by weight.

7. A gunning composition as claimed in claim 5 or claim 6 wherein the mullite comprises between 57-73% by weight alumina, 27-40% by weight silica, and smaller amounts of impurities.

8. A gunning composition as claimed in any one of the preceding claims wherein the granular base material comprises brown fused alumina having an average diameter of between 30 micrometers and 7 millimeters.

9. A gunning composition as claimed in claim 8 wherein the brown fused alumina is present in an amount of between 70-75% by weight.

10. A gunning composition as claimed in claim 8 or claim 9 wherein the brown fused alumina comprises between 93-98% by weight alumina and smaller amounts of titania, silica and iron.

11. A gunning composition as claimed in any one of the preceding claims wherein the granular base material comprises tubular alumina having an average diameter of between 30 micrometers and 7 millimeters.

12. A gunning composition as claimed in claim 11 wherein the tabular alumina is present in an amount of between 65-70% by weight.

13. A gunning composition as claimed in claim 11 or claim 12 wherein the tabular alumina comprises between 98.5-99.9% by weight alumina and smaller amounts of sodium oxide, silica, magnesium oxide and calcium oxide.

14. A gunning composition as claimed in any one of the preceding claims wherein the ball clay comprises between 28-30% alumina by weight, between 66-70% silica by weight, and smaller amounts of sodium oxide and titania.

15. A gunning composition as claimed in any one of the preceding claims wherein the silicon carbide has an average diameter of between 30 micrometers and 1.5 millimeters.

16. A gunning composition as claimed in any one of the preceding claims wherein the binder is formed from a dispersion of about 40% silica in water.

17. A gunning composition as claimed in any one of the preceding claims wherein the silica comprises colloidal silica.

18. A gunning composition as claimed in any one of the preceding claims wherein the silica has an average diameter of between 4-100 millimicrons.

19. A gunning composition as claimed in claim 18 wherein the silica has an average diameter of 8-20 millimicrons.

20. A gunning composition as claimed in any one of the preceding claims further comprising 5-10% by weight of a graphite material.

21. A gunning composition as claimed in any one of the preceding claims after the water has been partially or totally evaporated from the composition.

22. A method of preparing a gunning composition as claimed in claim 1 comprising a steps of:

preparing a medium of 15-70% by weight colloidal silica in water; and

preparing a mixture comprising 10-20% by weight of silicon carbide, 7-15% by weight of ball clay, 4-8% by weight of the silica dispersion, and 60-75% by weight of a base material selected from calcined clay, mullite, brown fused alumina, tabular alumina and mixtures thereof.

23. A method of preparing a gunning composition as claimed in claim 1 comprising the steps of:

preparing a finely dispersed medium of 15-70% by weight silica in water; and

preparing a mixture comprising 10-20% by weight of silicon carbide, 7-15% by weight of ball clay, 5-10% by weight of graphite, 4-8% by weight of the silica dispersion, and 60-75% by weight of a base material selected from calcined clay, mullite, brown fused alumina, tabular alumina and mixtures thereof.

24. Use of a gunning composition as claimed in any one of claims 1 to 21 in the steel industry for repairing and maintaining troughs, runners, ladles, spouts and other equipment used for containing and processing molten steel.

European
Patent Office

**EUROPEAN SEARCH
REPORT**

Application Number

**EP 90 30 8422**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 061 501  (P.L. IVARSSON et al.)<br>* claim 1 *<br>– – – | 1 | C 21 C 5/44<br>F 27 D 1/16<br>C 04 B 35/66 |
| A | DE-B-2 739 767  (COMBUSTION ENGINEERING)<br>* columns 6-8 *<br>– – – | 1 | |
| A | EP-A-0 004 509  (SOCIETE EUROPEENNE DES PRO-<br>DUITS REFRACTAIRES)<br>* claim 1 *<br>– – – | 1 | |
| A | EP-A-0 144 303  (STEPHAN PASEK & CIE)<br>* claim 1 *<br>– – – | 1 | |
| A | EP-A-0 193 751  (DIDIER-WERKE)<br>– – – – – | | |

|  | TECHNICAL FIELDS SEARCHED (Int. Cl.5) |
|---|---|
|  | C 21 C<br>F 27 D<br>C 04 B |

The present search report has been drawn up for all claims

| Place of search | Date of completion of search | Examiner |
|---|---|---|
| Berlin | 23 November 90 | SUTOR W |